# EUROPÄISCHE PATENTSCHRIFT

(11) **EP 0 390 825 B1**
(45) Veröffentlichungstag und Bekanntmachung des Hinweises auf die Patenterteilung: **10.03.1993**
(21) Anmeldenummer: 89900187.9
(22) Anmeldetag: 09.12.1988
(51) Int. Cl.: G02B 26/10, G01N 21/89

(54) **VORRICHTUNG ZUM OPTISCHEN ABTASTEN DER OBERFLÄCHE EINES OBJEKTES**
DEVICE FOR OPTICALLY SCANNING THE SURFACE OF AN OBJECT
DISPOSITIF DE BALAYAGE OPTIQUE DE LA SURFACE D'OBJETS

(30) Priorität: 10.12.1987 DE 3741770; 01.07.1988 DE 3822303
(43) Veröffentlichungstag der Anmeldung: 10.10.1990
(73) Patentinhaber: Birkle Sensor GmbH + Co., D-73525 Schwäbisch Gmünd (DE)
(72) Erfinder: Birkle, Gebhard, 7750 Konstanz (DE)
(74) Vertreter: Mierswa, Klaus, Dipl.-Ing.
(86) Internationale Anmeldenummer: DE8800758
(87) Internationale Veröffentlichungsnummer: WO8905468

(56) Entgegenhaltungen:
- DE-A- 3 601 442
- GB-A- 1 385 912
- Patent Abstracts of Japan, vol. 9, no. 182, (P-376)(1905) 27 July 1985 & JP A 6055211
- Proceedings of the 1981 Carnahan Conference on Crime Countermeasures, University of Kentucky, Lexington, Kentucky 13-15 May 1981, G.D. Arndt et al.: "Studies into automated ballistics signature identification techniques", pp 136-141.

## Beschreibung

### Technisches Gebiet:

Die Erfindung betrifft eine Vorrichtung zum optischen Abtasten der Oberfläche eines Objektes, insbesondere eines durchsichtigen, durchscheinenden oder undurchsichtigen, bewegbaren Objektes, dessen Oberfläche Licht zu reflektieren oder zu streuen imstande ist, gemäß dem Oberbegriff des Anspruchs 1.

### Stand der Technik:

Durch die DE 3601442 ist eine Abtasteinrichtung zum optischen punktförmigen Abtasten eines Objektes bekanntgeworden, bestehend aus einer Lichtquelle, deren Licht mittels einer Ablenkeinrichtung auf das abzutastende Objekt geworfen und danach das Licht nach Reflexion oder Transmission durch das Objekt in einer lichtelektrischen Auswerteeinrichtung ausgewertet wird, wobei die Ablenkeinrichtung aus einer rotierenden Umlenkoptik besteht, deren Rotationsachse mit der Achse des einfallenden Lichtstrahls zusammenfällt und die den abgelenkten Lichtstrahl auf einer Kreisbahn um die Rotationsachse herumrotieren läßt, wobei der Abtaststrahl bezüglich der Rotationsachse parallel oder in einem Winkel hierzu geneigt verläuft. Die Umlenkoptik ist ein Prisma, das mit hoher Drehzahl dreht und eine schräg stehende Spiegelfläche besitzt, die den Abtaststrahl auf einen feststehenden Hohlspiegel wirft, wobei das Prisma innerhalb des vom Hohlspiegel umschlossenen Raumes auf der Hauptachse des Hohlspiegels angeordnet ist, die mit der Rotationsachse des Prismas zusammenfällt und das Objekt sich innerhalb des Öffnungswinkels des Hohlspiegels befindet. Innerhalb des Öffnungswinkels des Hohlspiegels ist ein zweiter Hohlspiegel angeordnet, deren Achsen zusammenfallen und das Objekt sich innerhalb des Öffnungwinkels des zweiten Hohlspiegels oder direkt im vom zweiten Hohlspiegel umschlossenen Raum befindet. Da die Umlenkoptik eine Hubbewegung ausführt, ist die Abtastung der Mantelfläche eines Objektes bei Rotation möglich. Diese Art der räumlichen Abtastung der Oberfläche eines Objektes, insbesondere bei kleinen Objekten, ist schwierig durchzuführen, weil zum Erhalt eines Bildes hoher Schärfe ein hoher Aufwand hinsichtlich der Optik und der rotierenden Teile getrieben werden muß, was zu teuren Apparaten führt. Mit bewegten Umlenkoptiken ist es schwierig, stehende Abbildungen mit hoher Auflösung zu gewinnen.

Durch die JP-A-60-55211 ist eine im Aufbau sehr ähnliche Abtasteinrichtung zum punktförmigen Abtasten eines Objektes bekanntgeworden mit ebenfalls zwei zentrisch übereinander angeordneten ringförmigen Hohlspiegeln und einem rotierenden Prisma mit schräger Spiegelfläche, die einen rotierenden Lichtstrahl auf den oberen Hohlspiegel wirft, der den Lichtstrahl umleitet und auf den darunterliegenden zweiten Hohlspiegel wirft, der den Lichtstrahl auf das Objekt lenkt. Von dort gelangt das Licht auf dem gleichen Weg wieder zurück auf einen photoempfindlichen Sensor.

Durch die US-PS 4 352 550 ist eine Anordnung eines rotierenden Prismas mit schrägstehender Spiegelfläche innerhalb eines Ringes von lichtleitenden Fasern bekanntgeworden, deren Enden dergestalt dem Prisma zugewandt sind, daß ein von der Spiegelfläche des Prismas reflektierter Lichtstrahl auf die Enden der Lichtleitfasern geworfen wird. Die entfernten Enden der Lichtleitfasern sind zu einer Geraden zusammengefaßt, so daß ein rotierender Lichtstrahl in einen hin- und hergehenden Lichtstrahl umgeformt wird. Diese Vorrichtung besitzt die gleichen Nachteile wie die zuerst geschilderte Vorrichtung, wobei mit beiden ein sich bewegendes Objekt nicht abgetastet werden kann.

### Technische Aufgabe

Der Erfindung liegt die Aufgabe zugrunde, eine Vorrichtung des genannten technischen Gebietes zu schaffen, mit der die Oberfläche von Objekten, deren Oberfläche Licht zu reflektieren oder zu streuen imstande ist, vorzugsweise während einer Bewegung der Objekte, abgetastet werden kann, um daraus ein Bildsignal hoher Auflösung für die Wiedergabe eines Bereiches einer bestimmten Breite des Umfangs des Objektes bei dessen Bewegung als abgebildetes Umfangsband zu gewinnen.

### Darstellung der Erfindung:

Die Lösung der Aufgabe besteht erfindungsgemäß in den Merkmalen des Anspruchs 1. Weitere Ausgestaltungen der Erfindung sind in den abhängigen Ansprüchen gekennzeichnet.

Die Erfindung besitzt den hervorstechenden Vorteil, daß mit ihr praktisch beliebig geformte Objekte, die durchscheinend, durchsichtig oder undurchsichtig sein können, aber deren Oberfläche Licht zu reflektieren oder zu streuen imstande ist, dergestalt abgetastet werden können, daß ein Bereich vorgebbarer Breite des gesamten Umfangs oder nur ein Teil desselben während der Bewegung des Objektes als Bildsignal, zum Beispiel in Form eines abgebildeten Umfangsbandes oder eines Teils des Umfangsbandes, mit höchster Auflösung gewonnen werden kann. Dabei kann die Oberfläche des Objektes regelmäßig oder diffus reflektieren, das Objekt kann ein hohes oder geringes Reflexionsvermögen haben. Besitzt das Objekt auf seiner Oberfläche Unregelmäßigkeiten, Löcher, Ausbrüche, Abbrüche, Abplatzungen, Kantenbeschädigungen oder sonstige Abweichungen, so verändert sich dadurch die Reflexion oder Streuung gegenüber der normalen Oberfläche; diese Änderung der Reflexion oder Streuung kann erfindungsgemäß detektiert werden.

Insbesondere ist die erfindungsgemäße Vorrichtung dazu geeignet, längliche Objekte, vorzugsweise bei Bewegung derselben, wie Schrauben, Nägel, Bleistifte, Gläser, textile Fäden und vieles andere mehr, auf ihre Oberflächenbeschaffenheit zu untersuchen, um nach vorgegebenen Gütekriterien beispielsweise eine Sortierung der Objekte vorzunehmen. Dabei kann die Vorrichtung z. B. dergestalt ausgelegt sein, daß die Oberfläche der Objekte im freien Fall oder im laufenden Durchgang bei einem Faden detektiert werden kann, wodurch eine hohe Leistung der erfindungsgemäßen Vorrichtung mit großem Durchsatz an Objekten bzw. pro laufenden Meter Objekt gewährleistet ist. Von besonderem Vorteil ist, daß gleichzeitig sowohl ein Umfangsring, als auch die Stirnfläche eines Objektes optisch untersucht werden kann.

### Kurzbeschreibung der Zeichnung:

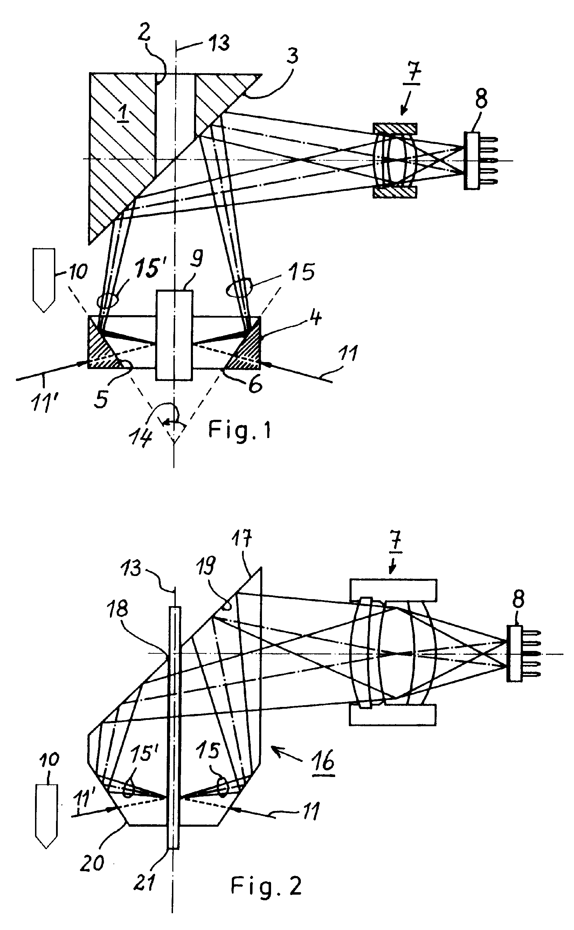

Figur 1 eine schematische Darstellung einer Vorrichtung, bestehend aus zwei Spiegelkörpern mit Durchgangsöffnungen, von denen der eine als halbdurchlässiger Pultspiegel mit innenliegender, kegelstumpfförmiger, umlaufender Spiegelfläche, der andere darüber mit einer schräg stehenden Spiegelfläche ausgebildet ist, einer Optik und einem dahinter befindlichen Sensor, wobei die Beleuchtung des Objektes peripher seitlich durch den Pultspiegel oder oberhalb desselben erfolgt
Figur 2 eine weitere Vorrichtung mit einem einzigen Spiegelkörper, innerhalb desselben eine halbdurchlässige kegelstumpfförmig umlaufende und eine schräge Spiegelfläche ausgebildet sind zum Abtasten von länglichen Objekten relativ geringen Durchmessers, die länger als der Spiegelkörper sind, beispielsweise von Bleistiften oder Fäden

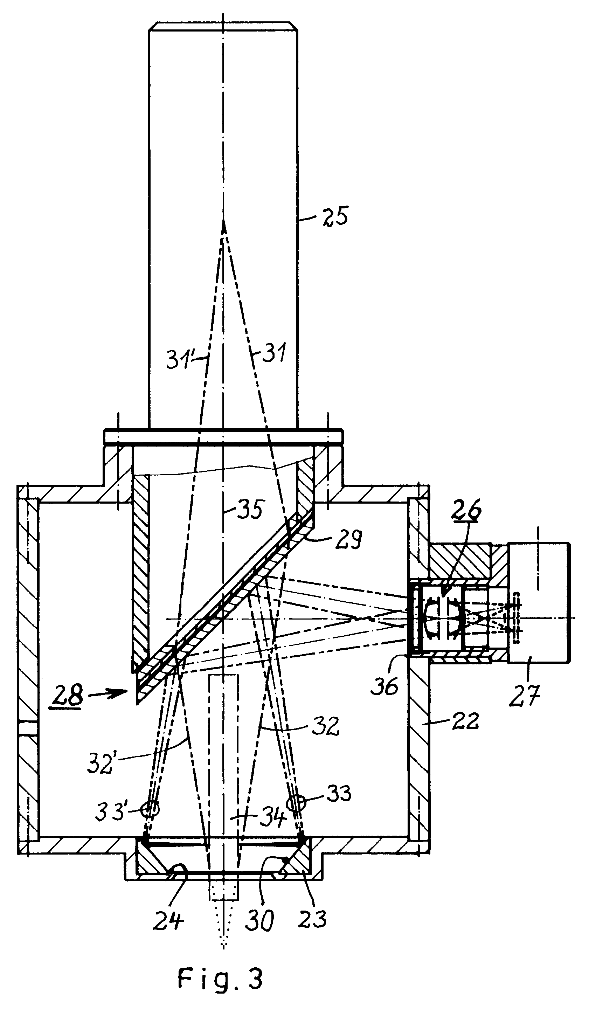

Figur 3 eine ähnliche Vorrichtung gemäß der Figur 1, wobei hier die obere Spiegelfläche geschlossenflächig als holographische Linse mit darunter halbdurchlässigem Spiegel ausgebildet ist und die Beleuchtungseinrichtung senkrecht oberhalb der Spiegel angeordnet ist und das Licht in etwa parallel zum Objekt auf dasselbe geworfen wird

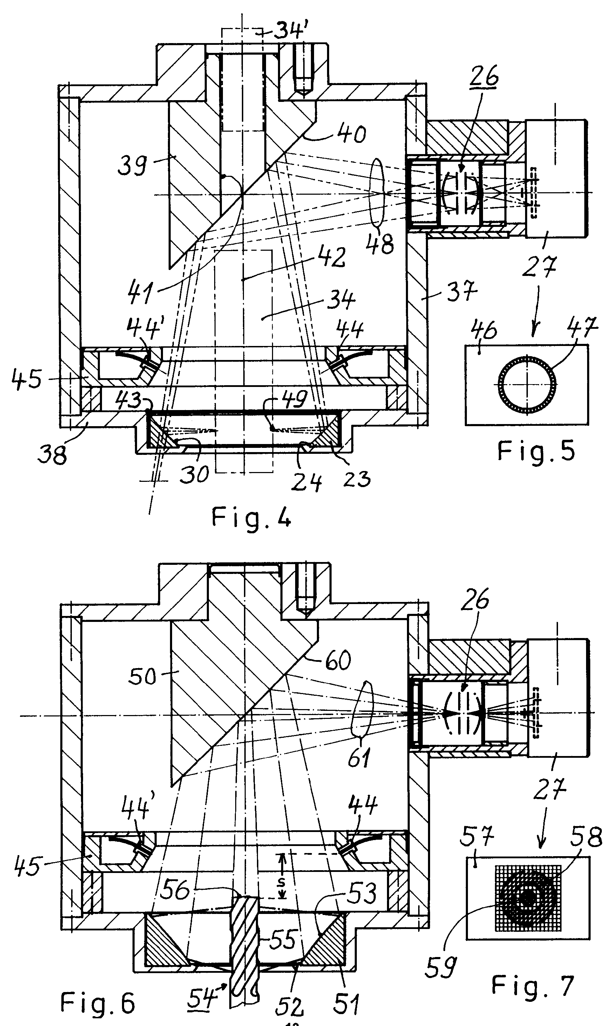

Figur 4 eine technische Ausgestaltung einer Vorrichtung gemäß der Figur 1, deren oberer Spiegelkörper ein schräger ebener Planspiegel mit einer Durchgangsöffnung und das optische Bauelement ein prismatischer Pultspiegel mit innenliegender kegelstumpfförmigumlaufender Spiegelfläche mit einer Durchgangsöffnung ist, einer Beleuchtungseinrichtung für das Objekt bestehend aus oberhalb des Pultspiegels kreisförmig angeordneten Lichtleitfasern, einer Optik und einem dahinter befindlichen Sensor
Figur 5 die schematische Darstellung der Abbildung gemäß der Figur 4 eines schmalen Umfangringes bzw. einer Abtastzeile auf dem Sensor
Figur 6 eine technische Ausgestaltung einer Vorrichtung, deren oberer Spiegelkörper ein integraler, schräger und ebener Planspiegel und das optische Bauelement ein Pultspiegel mit innenliegender, kegelstumpfförmig umlaufender und konvex gewölbter Spiegelfläche mit einer Durchgangsöffnung ist, einer Beleuchtungseinrichtung wie in Figur 6, einer Optik und einem dahinter befindlichen Sensor zur Abbildung sowohl eines Umfangringes als auch der Stirnfläche eines Objektes
Figur 7 eine Darstellung der durch die Figur 6 erzielten Abbildung des Umfangsringes und der Stirnfläche des abzutastenden Objektes.

### Wege zur Ausführung der Erfindung:

Die Figur 1 zeigt eine schematische Anordnung einer Vorrichtung, bestehend aus einem unteren prismatischen Spiegelkörper 4, über dem ein oberer Spiegelkörper 1 angeordnet ist, die beide senkrecht übereinander angeordnet gehaltert sind. Die Spiegelkörper 1 und 4 bestehen aus geeigneten Gläsern mit entsprechend verspiegelten Flächen als Spiegelflächen; ebenso können die Spiegelkörper aus Metall mit verspiegelten Metallflächen bestehen. Der Spiegelkörper 1, der vorzugsweise zylindrisch gestaltet ist mit einer Durchgangsöffnung 2, die parallel der Haupt- oder Zylinderachse 13 des Zylinders 1 verläuft, besitzt eine schräg verlaufende ebene Spiegelfläche 3 mit elliptischer Kontur, die durch eine den Zylinder 1 schräg schneidende Ebene gebildet wird.

Der Spiegelkörper 4 ist als Pultspiegel ausgebildet, dessen Spiegelfläche 5 vorzugsweise innenliegend kegelstumpfförmig und halbdurchlässig ist und dessen Hauptachse mit der Hauptachse 13 zusammenfällt. Zentrisch durch die Spiegelfläche 5 bzw. den Spiegelkörper 4 verläuft eine Durchgangsöffnung 6 in Richtung der Hauptachse 13 der Spiegelfläche 5, so daß die beiden Durchgangsöffnungen 2,6 zusammenfallende Hauptachsen haben. Das Objekt 9, das durchsichtig oder durchscheinend oder undurchsichtig sein kann, kann durch die Durchgangsöffnungen 2,6 hindurchbewegt werden, was durch den Bewegungspfeil 10 angedeutet ist, z.B. auch im freien Fall. Seitlich der Spiegelfläche 3 des Spiegelkörpers 1 befindet sich ein Objektiv 7 zur optischen Abbildung; hinter dem Objektiv 7 ist ein Sensor 8 angeordnet, der beispielsweise ein Diodenring oder eine Diodenfläche, vorzugsweise aber CCD-Matrix-Bauelement in Ringform oder in Flächenform ist.

Der Spiegelkörper 1 besitzt einen Durchmesser, der ungefähr gleich dem größten Durchmesser der Spiegelfläche 5 ist, so daß in Parallelprojektion aufeinander die Spiegelflächen 3,5 ungefähr gleich groß sind. Der Spiegelkörper 1 befindet sich innerhalb des Öffnungswinkels 14 der Spiegelfläche 5.

Das Objekt 9 wird beleuchtet von einer Mehrzahl von das Objekt 9 ringförmig umgebenden Lichtstrahlen 11,11′, wobei der Auftreffwinkel der Lichtstrahlen 11,11′ auf die Oberfläche des Objektes 9, bezogen auf die Hauptachse 13 der Durchgänge 2 und 6 der Spiegelkörper 1 und 4, ungleich 90 Grad sein kann, so daß die Lichtstrahlen 11,11′ und die Hauptachse 13 der Durchgänge 2,6 für das Objekt 9 nicht senkrecht aufeinanderstehen, aber die Lichtstrahlen schräg die Hauptachse 13 durchsetzen. Der Spiegelkörper 4 kann in geeigneter Weise im Auftreffbereich der Lichtstrahlen 11,11′ lichtdurchlässig sein, so daß die das Objekt 9 ringförmig umgebenden Lichtstrahlen 11,11′ den Spiegel körper 4 und die halbdurchlässige Spiegelfläche 5 durchsetzen und innerhalb einer bestimmten Breite auf die gesamte, umlaufende Oberfläche des Objektes 9 fallen und dort einen mehr oder weniger schmalen Oberflächenring abtasten. Oder die Beleuchtung des Objektes erfolgt ringförmig seitlich oberhalb des Pultspiegels 4. Von dort wird das Licht auf die Spiegelfläche 5 reflektiert oder auch Streulicht gelangt dorthin, von wo das reflektierte Licht 15,15′ nach oben auf die Spiegelfäche 3 fällt, die das Licht auf das Objektiv 7 wirft, das das Licht bündelt und entsprechend des Abbildungsmaßstabes auf dem Sensor 8 abbildet. Das CCD-Matrix-Bauelement, welches softwaremäßig als Ring oder Fläche angesteuert werden kann, bildet das abgetastete Umfangsband des Objektes 9 als Kreisringzeile oder -fläche ab.

Wird nun bei dem beschriebenen Abtastvorgang das Objekt 9 in Richtung des Bewegungspfeils 10 in Richtung der Hauptachse 13 der Vorrichtung bewegt, so ist offensichtlich, daß die gesamte Umfangsfläche des Objektes 9 abgetastet und im Sensor 8 als zeitlich sich ändernde Kreisringfläche wiedergegeben wird, die bildlich die beleuchtete Umfangsfläche abbildet. Wird beim Durchgang des Objektes 9 durch die Spiegelfläche 5 zum Zeitpunkt t eine Unregelmäßigkeit auf der Oberfläche des Objektes 9 beleuchtet, so wird diese Unregelmäßigkeit synchron in dem auf der Kreisringfläche des Sensors 8 dargestellten Umfangsband des Objektes 9 angezeigt, so daß dieses Objekt beispielsweise aussortiert werden kann.

In Figur 2 ist eine Vorrichtung gezeigt, die insbesondere zum Abtasten von langen Objekten, wie Bleistiften, oder fortlaufenden Objekten, wie Fäden, mit einer durchsichtigen oder durchscheinenden oder undurchsichtigen Oberfläche geeignet ist, die reflektierende Eigenschaften haben muß.

Ein z.B. zylindrisch geformter prismatischer Spiegelkörper 16 besitzt eine schräge Ebene 17, die in Richtung der Hauptachse 13 des Spiegelkörpers 16 eine Durchgangsöffnung 18 aufweist. Das untere Ende des Spiegelkörpers 16 ist kegelstumpfförmig abgeschrägt unter Bildung einer umlaufenden Kegelfläche, die halbdurchlässig innen verspiegelt ist, so daß dadurch eine Kegelspiegelfläche 20 gebildet ist. Die obere schräge Ebene 17 ist als innen verspiegelte Spiegelfläche 19 ausgeführt, von der sich seitlich ein Objektiv 7 und dahinter ein Sensor 8 gemäß der Figur 1 befinden; die Beleuchtung des Objektes 21 kann gleichermaßen wie in Figur 1 beschrieben erfolgen.

Der Figur 2 ist zu entnehmen, daß das abzutastende Objekt 21 länger sein kann, als die Höhe des Spiegelkörpers 16. Wenn der Durchmesser des Objektes 21 ein gewisses Größenverhältnis zum Objektivdurchmesser des Objektivs 7 nicht übeschreitet, so wirkt das längliche Objekt 21 bei der Abtastung optisch wie eine Blende, so daß trotz einer gewissen Abdeckung des Objektives 7 durch die Dicke des Objektes 21 bei einem gewissen Helligkeitsverlust quasi um das Objekt herumgesehen werden kann. Wird dieses Verhältnis zwischen der Dicke des abzutastenden Objektes 21 und dem Durchmesser des Objektivs 7 eingehalten bzw. nicht überschritten, so ist damit die Bedingung erfüllt, daß auch Objekte in Bewegung abgetastet werden können, die länger sind als der gesamte Spiegelkörper, beispielsweise ein Faden.

Figur 3 zeigt ein Beispiel einer Vorrichtung, bestehend aus einem Gehäuse 22, in das im unteren Bereich zentrisch ein Pultspiegel 23 eingesetzt ist, der entsprechend dem Spiegelkörper 4 der Figur 1 ausgebildet sein kann und der eine zentrische Durchgangsöffnung 24 aufweist. Oberhalb des Gehäuses 22 befindet sich eine Beleuchtungseinrichtung 25, die beispielsweise einen Laser beinhaltet. Seitlich am Gehäuse 22 ist hinter einem Fenster 36 eine Optik 26 angeordnet, hinter der sich ein Sensor 27 befindet, der entsprechend dem Sensor 8 der Figur 1 gestaltet und dessen Ausgang auf eine nicht gezeigte Auswerteeinrichtung gelegt ist. Oberhalb des Pultspiegels 23 befindet sich innerhalb des Gehäuses 22 eine schrägstehende holographische Linse 28, auf deren Unterseite ein halbdurchlässiger Spiegel 29 angeordnet ist.

Ein Lichtbündel 31,31′ der Beleuchtungseinrichtung 25 fällt durch die holographische Linse 28 und wird von dieser fokussiert, so daß danach die Begrenzungsstrahlen 32, 32′ unter einem spitzen Winkel, bezogen auf die Mittelachse 35, auf ein abzutastendes Objekt 34 fallen, welches durch die Durchgangsöffnung 24 innerhalb des Pultspiegels 23 bewegt werden kann. Die von der Oberfläche des Objektes 34 reflektierten Lichtstrahlen 33,33′ fallen auf die Spiegelfläche 30 des Pultspiegels 23, werden von dort reflektiert und fallen auf den halbdurchlässigen Spiegel 29 und nach Reflexion von dort durch die Optik 26 auf den Sensor 27.

Die holographische Linse 28 und der halbdurchlässige Spiegel 29 weisen keine Durchgangsöffnung auf, sondern das Objekt 34 wird unterhalb der Linse 28 in die Durchgangsöffnung 24 des Pultspiegels 23 bewegt. Es ist eine Ausführung der holographischen Linse 28 und des halbdurchlässigen Spiegels 29 denkbar, die eine gemeinsame Durchgangsöffnung aufweisen. Des weiteren ist eine Ausgestaltung möglich in der die holographische Linse durch einen halbdurchlässigen Fresnellspiegel ersetzt werden kann.

In allen bisherigen Figuren sind sämtliche Längen der begrenzenden Lichtstrahlen der eingeschlossenen Lichtbündel jeweils gleich lang.

Figur 4 zeigt eine technische Ausgestaltung einer Vorrichtung ähnlich derjenigen der Figur 1, bestehend aus einem zylindrischen Gehäuse 37, in dessen unteren Gehäusedeckel 38 innerhalb einer zentrischen Aussparung ein Pultspiegel 23 (gemäß Figur 3) mit innenliegender, kegelstumpfförmiger und umlaufender Spiegelfläche 30 und mit einer Durchgangsöffnung 24 eingesetzt ist, wobei der obere Spiegelkörper 39 eine schräge und plane Spiegelfläche 40 gemäß der Figur 1 aufweist, der gegenüber eine Optik 26 und ein dahinter befindlicher Sensor 27 angeordnet sind. Der Spiegelkörper 39 besitzt eine Durchgangsöffnung 41 zum Durchtritt des Objektes 34′, wobei die Hauptachse 42 gleichzeitig Mittelachse des Pultspiegels 23 und des Spiegelkörpers 39 in der Senkrechten ist. Ein Objekt 34 kann auch von unten durch die Durchgangsöffnung 24 des Pultspiegels 23 bewegt werden.

Die Beleuchtung der Objekte 34,34′ erfolgt peripher über seitlich und oberhalb des Pultspiegels 23 ringförmig um den Weg der Objekte 34,34′ angeordnete Lichtleitfasern 44,44′, deren Enden höhenverstellbar innerhalb einer Halterung 45 gehaltert sein können. Die Normale der Austrittsflächen der Lichtleitfasern 44,44′ ist vorzugsweise nicht senkrecht zur Mittelachse 42 gerichtet, so daß das einfallende Licht unter einem Winkel ungleich 90 Grad auf die Oberfläche des Objektes 34 fällt. Die weitere Funktionsweise der Vorrichtung ist mit der zu den Figuren 1 und 3 beschriebenen gleich.

Figur 5 zeigt innerhalb des Sensors 27 ein CCD-Matrix-Bauelement 46, auf dem die Optik 26 das vom Objekt 34 reflektierte Licht 48 als einen schmalen Kreisring 47 abbildet, der den auf dem Objekt 34 abgetasteten Umfangsring 49 wiedergibt.

Figur 6 zeigt eine weitere technische Ausgestaltung einer Vorrichtung ähnlich derjenigen in Figur 4, wobei hier innerhalb des Gehäuses ein obererer, integraler Spiegelkörper 50 ohne Durchgangsöffnung eingesetzt ist, der gemäß dem Spiegelkörper 39 eine schräge, ebene Spiegelfläche 60 aufweist. Wie in Figur 4 ist unterhalb des Spiegelkörpers 50 ein Pultspiegel 51 mit einer Durchgangsöffnung 52 angeordnet. Im Unterschied zur Ausgestaltung der Figur 4 ist hier die schräg umlaufende innenliegende und kegelstumpfförmige Spiegelfläche 53 längs einer Mantellinie gekrümmt, so daß im Querschnitt die Schnittlinien der Spiegelfläche 53 gekrümmte Kurven, statt Geraden wie in den vorherigen Figuren, sind. Die Spiegelfläche 53 ist dergestalt konvex gekrümmt, so daß das vom Objekt 54 reflektrierte Licht 61 auseinandergezogen wird.

Die peripher-ringförmig oberhalb des Pultspiegels 51 angeordneten Lichtleitfasern 44,44′ haben von der Stirnfläche 56 eines Objektes 54, beispielsweise ein Bohrer, den Abstand s. Dieses wird zur Abtastung von unten durch die zentrale Durchgangsöffnung 52 des Pultspiegels 51 geschoben und mittels der peripher-ringförmig angeordneten Lichtleitfasern 44,44′ seitlich rings eines Umfangsringes 55 und von oben auf der Stirnfläche 56 beleuchtet. Dadurch wird ein relativ breiter Umfangsring 55 des Objektes 54 gleichzeitig mit der Stirnfläche 56 des Objektes 54 abgetastet.

Figur 7 zeigt das Ergebnis der Abtastung auf einem CCD-Matrix-Bauelement 57 innerhalb des Sensors 27. Zum einen werden ein relativ breiter Kreisring 58 abgebildet, der dem Umfangsring 55 des Objektes 54 entspricht, zum anderen wird gleichzeitig zentrisch innerhalb des Kreisringes 58 eine Kreisfläche 59 abgebildet, die die Stirnfläche 56 des Objektes 54 wiedergibt.

Das CCD-Matrix-Bauelement 57 kann dazu softwaremäßig elektronisch maskiert sein, so daß die gezeigte Abbildung des Kreisringes 58 und der Kreisfläche 59 erhalten werden.

Die Oberfläche des Pultspiegels kann auch zusätzlich konkav gekrümmt sein, so daß im Querschnitt durch einen derartigen Pultspiegel die Schnittlinien der Spiegelfläche konkav gekrümmte Linien sind. Ebenso kann der Pultspiegel zusammen mit dem Spiegelkörper eine anamorphotische Optik sein, die eine anamorphotische Abbildung ermöglichen.

Das beschriebene optische Bauelement kann auch aus einer Mehrzahl von Linsen bestehen, die das Objekt peripher kreisförmig umgeben und das reflektierte Licht auf den Sensor leiten, wobei gegebenenfalls zwischen den Linsen und dem Sensor optische Lichtleitfasern angeordnet sein können.

### Gewerbliche Anwendbarkeit:

Die erfindungsgemäße Vorrichtung und das Verfahren eignen sich einerseits insbesondere zum Einsatz dort, wo eine Vielzahl von Objekten, die insbesondere als Massenware hergestellt sein können, in kurzer Zeit nach vorgegebenen Gütekriterien geprüft oder sortiert werden sollen, andererseits dort, wo ein laufendes Objekt am Stück, beispielsweise ein textiler Faden, auf seine Oberflächenbeschaffenheit einschließlich seiner Farbe detektiert werden soll.

### Liste der Bezugszeichen:

- 1: Körper
- 2: Durchgangsöffnung
- 3: schräge Spiegelfläche
- 4: kegelförmiges Prisma
- 5: Kegelspiegelfläche
- 6: Durchgangsöffnung
- 7: Objektiv
- 8: Sensor (CCD-Matrix-Bauelement)
- 9: Objekt
- 10: Bewegungspfeil für die Bewegungsrichtung des Objektes
- 11,11′: einfallende Lichtstrahlen
- 12: kreisförmige Abtastfläche
- 13: Hauptachse
- 14: Öffnungswinkel
- 15: reflektierte Lichtstrahlen
- 16: prismatischer Spiegelkörper
- 17: schräge Ebene
- 18: Durchgangsbohrung
- 19: schräge, ebene innere Spiegelfläche
- 20: kegelförmige, halbdurchlässige Spiegelfläche
- 21: Objekt
- 22: Gehäuse
- 23: Pultspiegel
- 24: Durchgangsöffnung
- 25: Beleuchtungseinrichtung (Laser)
- 26: Optik
- 27: Sensor
- 28: holographische Linse
- 29: Spiegel mit Spiegelfläche
- 30: Spiegelfläche
- 31,31′,32,32′: Begrenzungsstrahlen
- 33,33′: reflektierte Lichtstrahlen
- 34: Objekt
- 35: Mittelachse
- 36: Fenster
- 37: Gehäuse
- 38: unterer Gehäusedeckel
- 39: Spiegelkörper
- 40: Spiegelfläche
- 41: Durchgangsöffnung
- 42: Hauptachse
- 43: Aussparung
- 44,44′: Lichtleitfasern
- 45: Halterung
- 46: CCD-Matrix-Bauelement
- 47: Kreisring
- 48: reflektierte Lichtstrahlen
- 49: beleuchteter, schmaler Umfangsring auf dem Objekt
- 50: Spiegelkörper
- 51: Pultspiegel
- 52: Durchgangsöffnung
- 53: Spiegelfläche
- 54: Objekt
- 55: Umfangsfläche
- 56: Stirnfläche
- 57: CCD-Matrix-Bauelement
- 58: Kreisring
- 59: Kreisfläche
- 60: Spiegelfläche
- 61: reflektierte Lichtstrahlen

## Patentansprüche

1. Vorrichtung zum optischen Abtasten der Oberfläche eines Objektes (9,21, 34,54), insbesondere eines durchsichtigen durchscheinenden oder undurchsichtigen bewegbaren Objektes, dessen Oberfläche Licht zu reflektieren oder zu streuen imstande ist, mit einer Lichtquelle (11,11′,25,31,31′,44, 44′) und einem optischen kegel- oder schalenförmigen, innen verspiegelten Pultspiegel (4,20,23,51) mit einer umlaufenden Spiegelfläche (5,20,30,53) und einer dazu zentrisch angeordneten Durchgangsöffnung (6,18,24,52) zum Durchgang des Objektes (9,21,34,54) durch den Pultspiegel (4,20,23,51), wobei in Richtung der Hauptachse (13,35,42) des Pultspiegels (4,20,23,51) innerhalb dessen Öffnungswinkel und über dessen Durchgangsöffnung (6,18,24,52) sich ein zweiter Spiegel (1,16,29,39,50) befindet, und mit einem opto-elektronischen Sensor (8,27,46,57) und einer elektrischen Auswerteeinrichtung, wobei das Licht nach Reflexion oder Streuung am Objekt (9,21,34,54) auf die Spiegelflächen (3,5,19,20,29,30, 40,53,60) der Spiegel (1,4,16,20,23,29,39,50,51) geworfen, auf den Sensor (8,27,46,57) gelenkt und in der Auswerteeinrichtung ausgewertet wird,
dadurch gekennzeichnet,
daß die Lichtquelle (11,11′,25,31,31′,44, 44′) das Objekt (9,21,34,54) rings dessen gesamten Umfangs im Bereich der Durchgangsöffnung (6,18,24,52) des Pultspiegels (4,20,23,51) beleuchtet dergestalt, daß das vom Objekt rings des Umfangs reflektierte oder gestreute Licht (15,15′,33,33′,48,61) gleichzeitig peripher auf die Spiegelfläche (5,20,30,53) des Pultspiegels (4,20,23,51) fällt, und der zweite Spiegel (1,16,29,39,50) eine schräg geneigte, ebene Spiegelfläche (3,19,29,40,60) besitzt, die das reflektierte oder gestreute Licht (15,15′,33,33′,48,61) auf eine Optik (7,26) leitet zur optischen, stehenden Abbildung auf den Sensor (8,27, 46,57), der ein vollständiges Umfangsband (47,58) detektiert, das einer Umfangsfläche (49,55) des Objektes von vorgegebener Breite entspricht.

2. Vorrichtung nach Anspruch 1,
dadurch gekennzeichnet,
daß der zweite Spiegel (1,16,29,39) oberhalb des Pultspiegels (4,20,23) ebenfalls eine Durchgangsöffnung (2,18,41) für das Objekt (9,21,34) besitzt, die senkrecht oberhalb der Durchgangsöffnung (6,18,24) des Pultspiegels (4,20,23) angeordnet ist und die Achsen (13,42) der beiden Durchgangsöffnungen (2,6,18,24,41) zusammenfallen.

3. Vorrichtung nach Anspruch 2,
dadurch gekennzeichnet,
daß der Pultspiegel aus einem Prisma (4,23) und der zweite Spiegel aus einem vom ersten Prisma getrennten Spiegelkörper (1,39) gebildet sind.

4. Vorrichtung nach Anspruch 2 oder 3,
dadurch gekennzeichnet,
daß beide Spiegel (19,20) sich gegenüberliegend aus einem prismatischen zylindrischen Spiegelkörper (16) gebildet sind, dessen unteres Ende kegelstumpfförmig als innenliegender Kegelspiegel (20) und dessen oberes Ende als schräger Planspiegel mit elliptischer Spiegelfläche (19) ausgebildet sind.

5. Vorrichtung nach Anspruch 1 oder 2,
dadurch gekennzeichnet,
daß zur peripheren Beleuchtung des Objektes (34,34′,54) Lichtleitfasern (44,44′) dienen, deren Enden innerhalb einer Halterung (45) kreisförmig gehaltert sind, die zentrisch oberhalb des Pultspiegels (23,51) angeordnet ist und den Weg des Objektes (34,54) durch den Pultspiegel (23,51) ringförmig umschließt.

6. Vorrichtung nach Anspruch 1,
dadurch gekennzeichnet,
daß der zweite Spiegel eine oberhalb des Pultspiegels (23) angeordnete holographische Linse (28) oder ein halbdurchlässiger Fresnellspiegel ist, zwischen der bzw. dem und dem Pultspiegel (23) ein halbdurchlässiger Spiegel (29) sich befindet wobei die Lichtquelle (25) senkrecht oberhalb der holographischen Linse (28) oder des Fresnellspiegels angeordnet ist.

7. Vorrichtung nach Anspruch 1,
dadurch gekennzeichnet,
daß der Sensor ein CCD-Matrix-Bauelement (8,27, 46,57) ist.

8. Vorrichtung nach Anspruch 1,
dadurch gekennzeichnet,
daß der Pultspiegel aus einer Mehrzahl von Linsen besteht, die kreisförmig angeordnet sind und das Objekt peripher umgeben und das reflektierte Licht auf den Sensor leiten, wobei gegebenenfalls zwischen den Linsen und dem Sensor optische Lichtleitfasern angeordnet sind.

## Claims

1. Device to optically scan the surface of an object (9,21,34,54), in particular, a transparent, translucent or opaque moveable object whose surface is capable of reflecting or scattering light, with a light source (11,11′,25,31,31′,44,44′) and an optical, conical or saucer-shaped pitched mirror (4,20,23,51) metal coated on the inside and having a peripheral reflecting surface (5,20,30,35) and a passage opening (6,18,24,52) positioned at its center which serves for the passage of the object (9,21,34,54) through the pitched mirror (4,20,23, 51), whereby there is a second mirror (1,16,29,39,50) positioned in the direction of the main axis (13,35,42) of the pitched mirror (4,20,23,51) inside its aperture angle and over its passage opening (6,18,24,52), and with an optoelectronic sensor (8,27,46,57) and an electrical evaluation device, whereby, after reflecting or scattering from the object (9,21,34,54), the light falls upon the reflecting surfaces (3,5,19,20,29,30, 40,53,60) of the mirrors (1,4,16,20,23,29,39,50,51), is deflected onto the sensor (8,27,46,57) and then evaluated in the evaluation device,
characterized in that
the light source (11,11′,25,31,31′,44,44′) lights up the object (9,21,34,54) all around its entire perimeter in the area of the passage opening (6,18,24,52) of the pitched mirror (4,20,23,51) in such a way that the light (15,15′,33,33′,48,61) reflected or scattered by the object around the perimeter simultaneously falls peripherally upon the reflecting surfaces (5,20,30,53) of the pitched mirror (4,20,23,51), and the second mirror (1,16, 29,39,50) has an inclined, flat reflecting surface (3,19, 29,40,60) which guides the reflected or scattered light (15,15′,33,33′,48,61) onto a lens (7,26) in order to create an optical, standing image on the sensor (8,27,46, 57), which detects a complete perimeter band (47,58) which corresponds to the perimeter surface (49,55) of the object having a predefined width.

2. Device according to Claim 1,
characterized in that
the second mirror (1,16,29,39) above the pitched mirror (4,20,23) likewise has a passage opening (2,18,41) for the object (9,21,34) which is positioned vertically above the passage opening (6,18,24) of the pitched mirror (4, 20,23) and in that the axes (13,42) of the two passage openings (2,6,18,24,41) coincide.

3. Device according to Claim 2,
characterized in that
the pitched mirror consists of a prism (4,23) and the second mirror is made of a mirror element (1,39) separated from the first prism.

4. Device according to Claim 2 or 3,
characterized in that
both mirrors (19,20) across from each other consist of a prismatic cylindrical mirror element (16) whose lower end is designed in a truncated cone shape as an internal conical mirror (20) and whose upper end is designed as an inclined flat mirror with an elliptical reflecting surface (19).

5. Device according to Claim 1 or 2,
characterized in that
optical fibers (44,44′) serve to peripherally light up the object (34,34′,54), and the ends of these fibers are attached circularly in a holder (45) which is positioned at the center above the pitched mirror (23,51) and encloses the path of the object (34,54) through the pitched mirror (23,51) in a circular manner.

6. Device according to Claim 1,
characterized in that
the second mirror positioned above the pitched mirror (23) is a holographic lens (28) or a half-silvered Fresnel mirror, in that there is a half-silvered mirror (29) between the holographic lens or the Fresnel mirror and the pitched mirror (23), and in that the light source (25) is positioned vertically above the holographic lens (28) or the Fresnel mirror.

7. Device according to Claim 1,
characterized in that
the sensor is a CCD matrix module (8,27,46,57).

8. Device according to Claim 1,
characterized in that
the pitched mirror consists of a number of lenses which are arranged in a circular manner and peripherally surround the object and guide the reflected light onto the sensor, whereby optionally, there are optical fibers between the lenses and the sensor.

## Revendications

1. Dispositif de balayage optique de la surface d'un objet (9,21,34,54), en particulier d'un objet transparent, translucide ou opaque mobile dont la surface est en mesure de refleter ou de disperser la lumière, comportant une source lumineuse (11,11′,25,31,31′,44,44′) et un miroir incliné optique en forme de cône ou de coque métallisé à l'intérieur (4,20,23,51) avec une surface reflétante périphérique (5,20,30,53) et une ouverture de passage (6,18,24,52) centrée servant au passage de l'objet (9,21,34,54) à travers le miroir incliné (4,20,23,51), un deuxième miroir (1,16,29,39,50) étant disposé en direction de l'axe principal (13,35,42) du miroir incliné (4,20,23,51) dans l'angle d'ouverture de ce dernier et au-dessus de son ouverture de passage (6,18,24,52), ainsi qu'un détecteur optoélectronique (8,27,46,57) et une unité d'évaluation électrique, et dans lequel la lumière, après avoir été reflétée ou dispersée sur l'objet (9,21, 34,54) est projetée sur les surfaces reflétantes (3,5,19, 20,29,30, 40,53,60) des miroirs (1,4,16,20,23,29,39,50, 51), dirigée vers le détecteur (8,27,46,57) et évaluée dans l'unité d'évaluation,
caractérisé par le fait
que la source lumineuse (11,11′,25,31,31′,44,44′) éclaire l'objet (9,21,34,54) sur tout son pourtour dans la zone de l'ouverture de passage (6,18,24,52) du miroir incliné (4,20,23,51) de sorte que la lumière reflétée ou dispersée (15,15′,33,33′,48,61) par l'objet sur tout le périmètre tombe simultanément de façon périphérique sur la surface reflétante (5,20,30,53) du miroir incliné (4,20, 23,51) et que le deuxième miroir (1,16,29,39,50) possède une surface reflétante plane inclinée (3,19,29,40,60) qui guide la lumière reflétée ou dispersée (15,15′,33,33′,48, 61) vers une optique (7,26) pour la représentation optique stationnaire sur le détecteur (8,27, 46,57) lequel détecte une bande périphérique complète (47,58) qui correspond à une surface périphérique (49,55) de largeur prédéterminée de l'objet.

2. Dispositif suivant la revendication 1,
caractérisé par le fait
que le deuxième miroir (1,16,29,39) au-dessus du miroir incliné (4,20,23) présente lui aussi une ouverture de passage (2,18,41) pour l'objet (9,21,34) qui est disposée perpendiculairement au-dessus de l'ouverture de passage (6,18,24) du miroir incliné (4,20,23) et que les axes (13,42) des deux ouvertures de passage (2,6,18,24,41) coïncident.

3. Dispositif suivant la revendication 2,
caractérisé par le fait
que le miroir incliné se présente sous forme d'un prisme (4,23) et le deuxième miroir sous forme d'un corps reflétant (1,39) séparé du premier prisme.

4. Dispositif suivant l'une quelconque des revendications 2 ou 3,
caractérisé par le fait
que les deux miroirs (19,20) sont disposés l'un vis-à-vis de l'autre et consistent en un corps de miroir (16) prismatique cylindrique dont l'extrémité inférieure tronconique se présente sous forme d'un miroir conique (20) intérieur et l'extrémité supérieure est un miroir plan incliné avec une surface reflétante elliptique (19).

5. Dispositif suivant l'une quelconque des revendications 1 ou 2,
caractérisé par le fait
que l'éclairage périphérique de l'objet (34,34′,54) est assuré par des fibres optiques (44,44′) dont les extrémités sont fixées de façon circulaire dans un support (45) lequel est disposé de façon centrée au-dessus du miroir incliné (23,51) et entoure le trajet de l'objet (34,54) à travers le miroir incliné (23,51) comme un anneau.

6. Dispositif suivant la revendication 1,
caractérisé par le fait
que le deuxième miroir disposé au-dessus du miroir incliné (23) est une lentille holographique (28) ou un miroir de Fresnel semi-argenté entre laquelle resp. lequel et le miroir incliné (23) se trouve un miroir semi-argenté (29), la source lumineuse (25) étant disposée au-dessus de la lentille holographique (28) ou du miroir de Fresnel.

7. Dispositif suivant la revendication 1,
caractérisé par le fait
que le détecteur est un composant à matrice CCD (8,27,46, 57).

8. Dispositif suivant la revendication 1,
caractérisé par le fait
que le miroir incliné consiste en une multiplicité de lentilles disposées de façon circulaire qui entourent l'objet périphériquement et dirigent la lumière reflétée vers le détecteur, des fibres optiques étant disposées le cas échéant entre les lentilles et le détecteur.
